# EUROPEAN PATENT APPLICATION

(11) **EP 2 875 970 A1**
(43) Date of publication of application: **27.05.2015**
(21) Application number: 12880724.5
(22) Date of filing: 07.08.2012
(51) Int. Cl.: B60C 27/04

(54) **TIRE ANTISKID DEVICE**

(30) Priority: 23.07.2012 JP 2012163060
(71) Applicant: Sakakibara, Kouichi, Hashima-shi, Gifu 501-6335 (JP)
(72) Inventor: Sakakibara, Kouichi, Hashima-shi, Gifu 501-6335 (JP)
(74) Representative: Kuhnen & Wacker
(86) International application number: PCT/JP2012/070045
(87) International publication number: WO 2014/016972

(57) **Abstract**

An object is to provide an anti-skid device for tires which can maintain the speedy and easy attachability even if the tire outer diameter varies more or less. The anti-skid device (S) for tires according to the present invention is configured of elementary units. Each elementary unit (1) has a first main body (11) comprising: a first U-shaped portion (112) that straddles sidewall parts of a tire (T); an inside front extending portion (111); and an outside rear extending portion (113), and a second main body (12) in the same form. The first main body (11) and the second main body (12) are connected with each other at the inward-facing side of the tire. This connection at the inward-facing side of the tire is performed using an inside front connector (131) connected to the first main body, an inside rear connector (132) connected to the second main body, and an inside coupling adjuster (133) connected to them and capable of adjusting the distance (inside connecting length) therebetween. This inside coupling adjuster can appropriately adjust the inside connecting length, so that the steady, speedy and easy attachability of the anti-skid device for tires can be maintained even if the tire outer diameter varies from an expected outer diameter.

## Description

### [Technical Field]

The present invention relates to an anti-skid device for tires (which may be simply referred to as "anti-skid device") that is attached to a tire of a vehicle, such as a motor vehicle, and can prevent slip of the tire and other troubles on a winter road, such as snowy road and frozen road.

### [Background Art]

To avoid slip of tires and other troubles when a vehicle, such as a motor vehicle, runs on a snowy road or frozen road, it has been performed to change the tires to studless tires or attach metal chains to the tires. However, studless tires are expensive and poor in fuel efficiency compared with summer tires. On the other hand, conventional metal chains are not easy to be attached, and particularly in the case of large-sized vehicles, attachment thereof needs considerably hard work. The present inventor has already proposed an innovative anti-skid device for tires which can completely solve such problems in the prior art, and the description in relation to this is disclosed in Patent Literature (PTL) below etc, for example.

### [Citation List]

### [Patent Literature]

[PTL 1]
Japanese Unexamined Patent Application Publication No. 2012-40884

### [Summary of Invention]

### [Technical Problem]

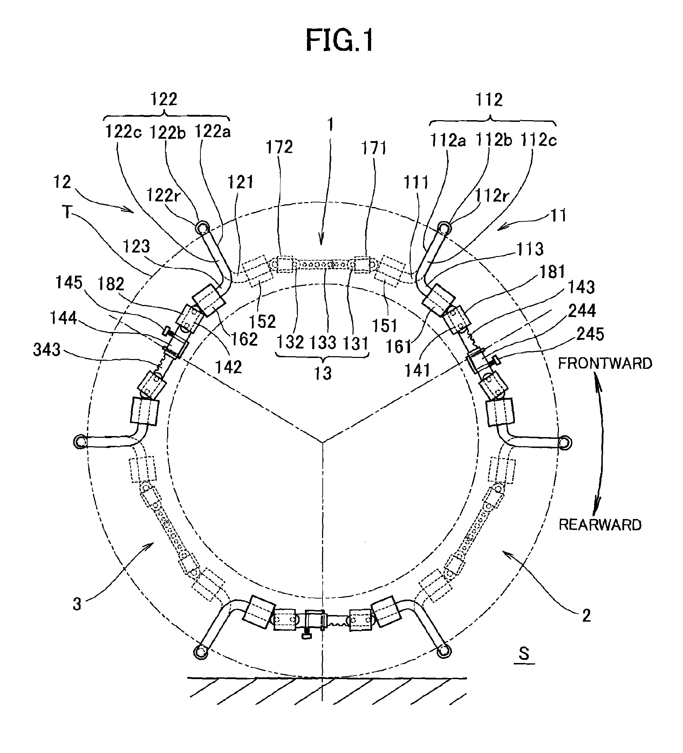

PTL 1 proposes an adjuster which, when the anti-skid device is attached to a tire, can adjust the distance between connectors (outside connecting length) connected with each other at the outside, i.e., outward-facing side, of the tire (opposite side to the tire housing) depending on the outer diameter (or circumferential length) of the tire. However, as apparent from FIG. 1 to FIG. 3 of PTL 1, such an adjuster is not provided at the inside, i.e., inward-facing side, of the tire (side of the tire housing), and the front and rear U-shaped members are merely connected to be separated from each other with a constant distance using a linear member comprising a leaf chain. The prior art anti-skid device for tires is thus configured such that, unless the leaf chain is disassembled and assembled again with different number of links, etc, the connecting length at the inside of the tire (inside connecting length) cannot inherently be adjusted.

The inside connecting length being constant may deteriorate the speedy and easy attachability of the anti-skid device for tires when the outer diameter of the tire varies from an expected outer diameter. Even though the adjuster provided at the outside of the tire can solely be used to absorb some variation in the outer diameter of the tire, the extent of adjustment may be small.

The present invention has been created in view of such circumstances, and an object of the present invention is to provide an anti-skid device for tires which can maintain at a higher level the speedy and easy attachability even if the tire outer diameter varies more or less.

### [Solution to Problem]

As a result of intensive studies to solve such problems and repeating trial and error, the present inventor has conceived of allowing the above-described inside connecting length also to be adjustable. Developing this achievement, the present invention has been accomplished as will be described hereinafter.

### «Anti-skid device for tires»

(1) The anti-skid device for tires (referred simply to as "anti-skid device") according to the present invention comprises two or more elementary units. Each of the two or more elementary units comprises: a first main body comprising a first U-shaped portion located from an inside sidewall part of a tire fitted therein with a wheel for vehicles to an outside sidewall part of the tire across a tread part of the tire, an inside front extending portion merging into the first U-shaped portion at the inside sidewall part side and extending in a frontward circumferential direction of the tire, and an outside rear extending portion merging into the first U-shaped portion at the outside sidewall part side and extending in a rearward circumferential direction of the tire; a first inside front connector provided pivotally at the inside front extending portion of the first main body; a first outside rear connector provided pivotally at the outside rear extending portion of the first main body; a second main body located at the frontward circumferential direction side of the first main body, the second main body comprising a second U-shaped portion located from the inside sidewall part to the outside sidewall part across the tread part, an inside rear extending portion merging into the second U-shaped portion at the inside sidewall part side and extending in the rearward circumferential direction of the tire, and an outside front extending portion merging into the second U-shaped portion at the outside sidewall part side and extending in the frontward circumferential direction of the tire; a second inside rear connector provided pivotally at the inside rear extending portion of the second main body; and a second outside front connector provided pivotally at the outside front extending portion of the second main body. The first inside front connector and the second inside rear connector are connected with each other to form each of the two or more elementary units. The anti-skid device has a feature that each of the two or more elementary units further comprises: an inside coupling adjuster capable of adjusting a distance between the first inside front connector and the second inside rear connector.
(2) According to the anti-skid device of the present invention, the inside coupling adjuster is provided between the first inside front connector and the second inside rear connector, both of which may be arranged at the tire inside (vehicle inside or tire housing side), to thereby allow the distance between these connectors (inside connecting length) to be adjusted. The inside coupling adjuster may be used to appropriately adjust the inside connecting length, so that even if the outer diameter of a tire to which the anti-skid device is to be attached is different from an expected outer diameter, the anti-skid device can absorb the outer diameter variation and can be attached to the tire in a stable state, thus maintaining the speedy and easy attachability.

Note that the cases where the actually measured outer diameter of a tire (actual outer diameter) is different from an expected outer diameter for the anti-skid device at the time of shipping may include, such as, but not limited to, a case where actual outer diameters are different among various tire makers even under the same general specification, a case where a reproduced tire (retread tire) is used which is obtained by applying again new tread rubber to the outer circumference part of a used tire, and a case where a tire is simply worn through the use. The cases where the outer diameter of a tire is different from an expected outer diameter include both cases where the actual outer diameter is larger and smaller than the expected outer diameter.

The type and size of a tire to which the anti-skid device according to the present invention is attached is not limited, but the anti-skid device according to the present invention is preferably attached to a large diameter tire to be used for large-sized motor vehicles, such as motor trucks, and large-sized special motor vehicles, etc. This is because the outer diameter variation of such a large diameter tire is likely to be relatively large compared with that of a small diameter tire to be used for small-sized motor vehicles.

### «Others»

(1) Each connector and each adjuster as used herein are expressed individually for descriptive purposes, but each connector may be configured commonly with each adjuster. That is, each connector according to the present invention may be one which also has the functionality of each adjuster to involve the adjuster. In this case, each connector can be expressed as being one which comprises an adjusting mechanism or an adjusting means that adjusts the distance between adjacent connectors.
   More specifically, a paraphrase may be possible, such as that "at least one of the first inside front connector and the second inside rear connector comprises an inside coupling adjusting mechanism (means) capable of adjusting the distance therebetween", or "at least one of the first outside rear connector and the second outside front connector comprises an outside coupling adjusting mechanism (means) capable of adjusting the distance therebetween". In this case, the adjusting member and the connecting member that constitute each adjuster may be stated using other terms, such as an "adjusting portion" and a "connecting portion", respectively.
(2) The "inside" as used herein refers to the side of a vehicle, whereas the "outside" refers to the opposite side thereto, i.e., the non-vehicle side, or the side of the decorative surface regarding a wheel. In addition, distinction between the "frontward" and the "rearward" is merely for descriptive purposes. As one exemplary case, the direction where the tire rotates when the vehicle runs forward means the "frontward", whereas the opposite direction thereto means the "rearward".
(3) Vehicles to which the anti-skid device according to the present invention is attached may be motor vehicles (including wagons), industrial vehicles and other vehicles as well as two-wheel vehicles and the like. In the case of two-wheel vehicles, the previously-described "inside" may be read as "right side" and the "outside" as "left side".

### [Brief Description of Drawings]

[Fig. 1]
   Fig. 1 is a front elevational view illustrating an appearance that an anti-skid device for tires according to an example is attached to a tire.
[Fig. 2]

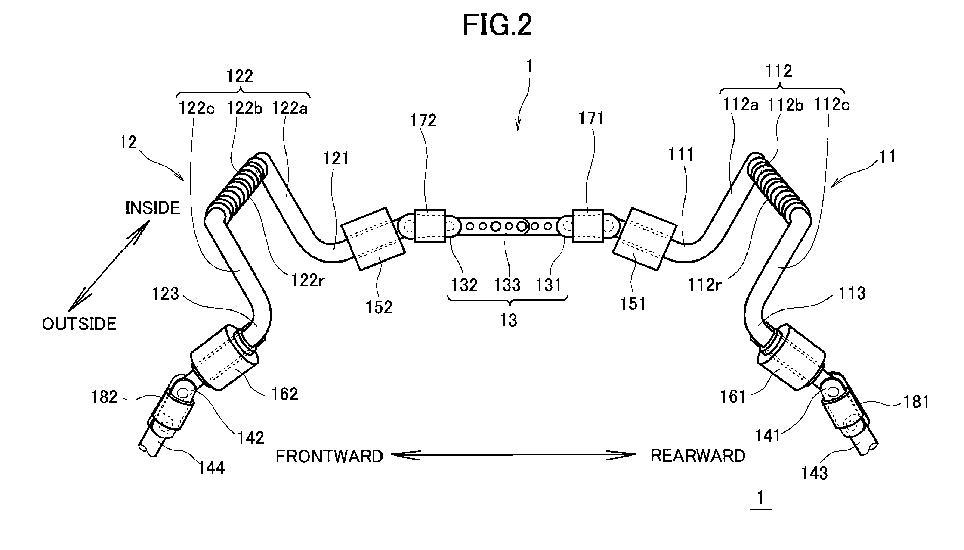

   Fig. 2 is a perspective view illustrating an elementary unit.
[Fig. 3]

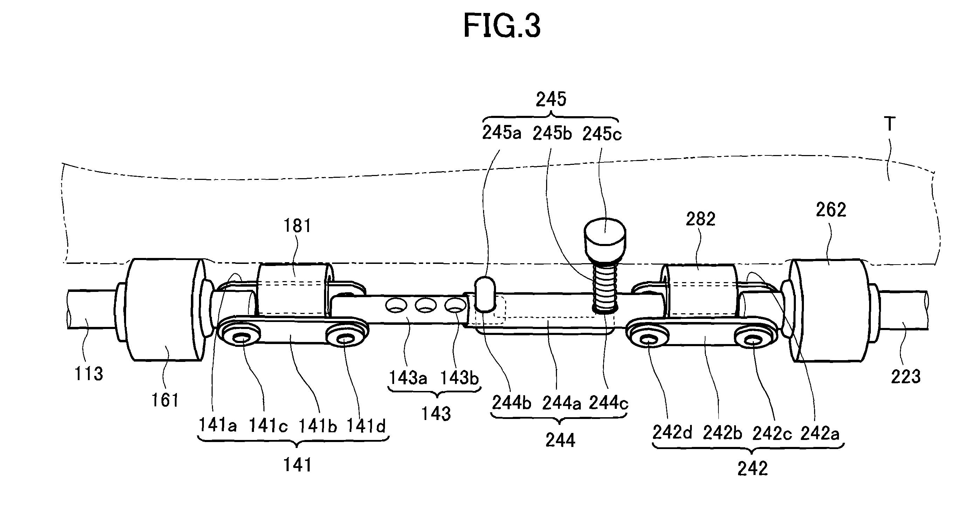

   Fig. 3 is a perspective view illustrating an example of connectors and an outside coupling adjuster that are arranged at the outside.
[Fig. 4]

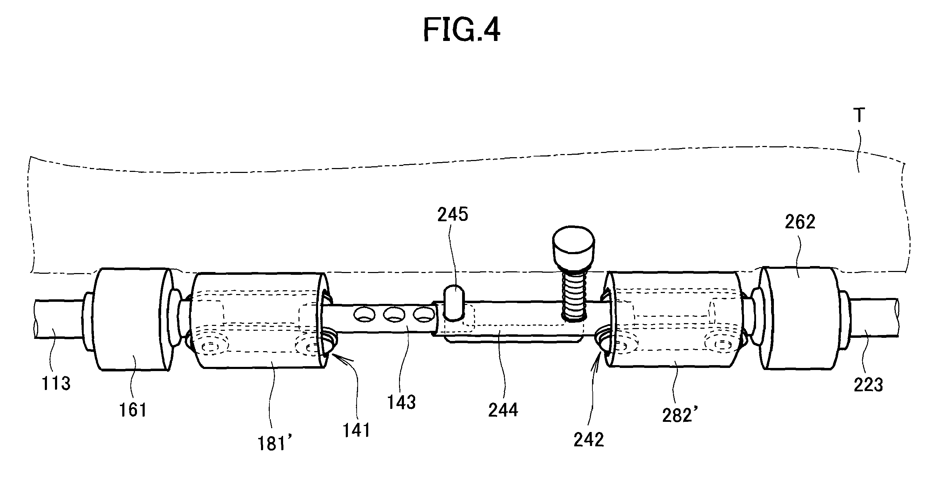

   Fig. 4 is a perspective view illustrating a modified example thereof.
[Fig. 5]

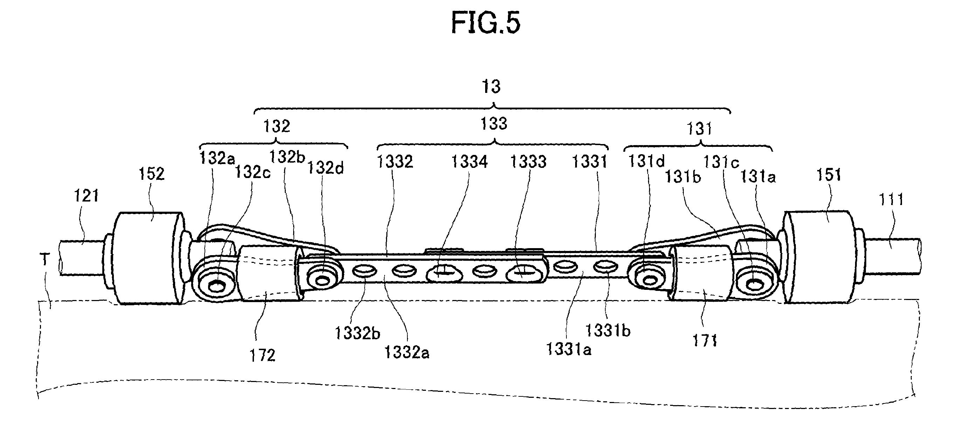

   Fig. 5 is a perspective view illustrating an example of connectors and an inside coupling adjuster that are arranged at the inside.
[Fig. 6]

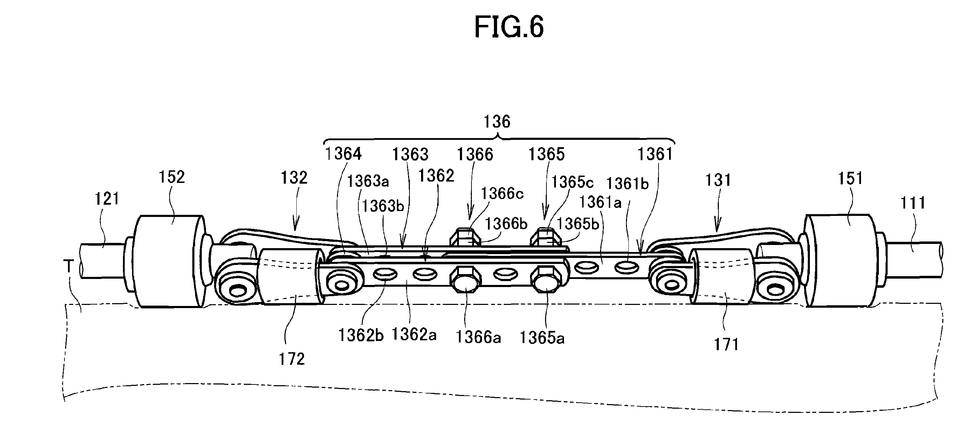

   Fig. 6 is a perspective view illustrating a modified example thereof.
[Fig. 7]

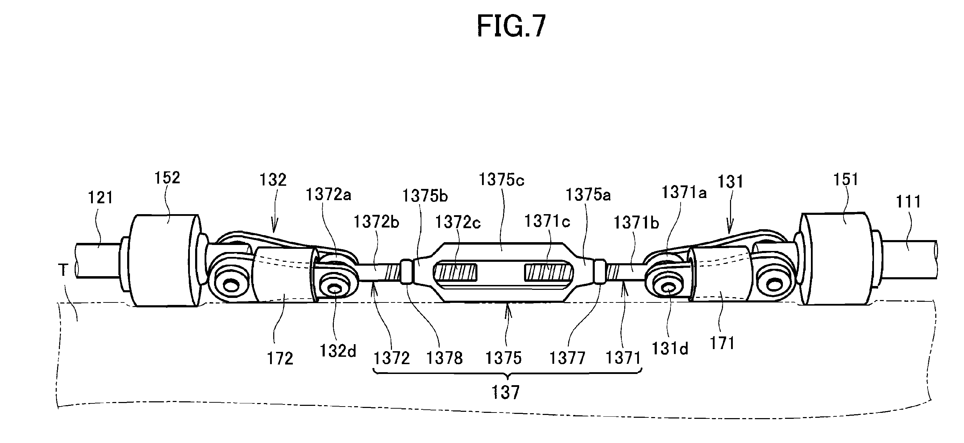

   Fig. 7 is a perspective view illustrating another example thereof.

### [Description of Embodiments]

One or more features freely selected from the description herein may be added to the above-described features of the present invention. Which embodiment is the best or not is different in accordance with objectives, required performance and other factors.

### «Inside coupling adjuster»

The inside coupling adjuster according to the present invention is arranged between the first inside front connector and the second inside rear connector which constitute a part of each elementary unit of the anti-skid device, and can adjust the distance between these connectors (inside connecting length). Various forms of the inside coupling adjuster are possible, and any form may be employed in the present invention unless troubles occur during the use of the anti-skid device.
(1) According to one embodiment, the inside coupling adjuster comprises: a first adjusting member provided to extend from the first inside front connector in the frontward circumferential direction; a second adjusting member provided to extend from the second inside rear connector in the rearward circumferential direction; and a connecting member connecting the first adjusting member and the second adjusting member. Note that the term "provided to extend" as used herein may include a case where the first inside front connector and the first adjusting member, or the second inside rear connector and the second adjusting member, are in an integrated fashion, and a case where they are connected or coupled with each other in a pivotally movable state (pivotally provided state) or in a pivotally immovable state (fixed state).

Specific adjusting mechanism for the inside connecting length is different depending on the form of each adjusting member and the connecting member. For example, if a plurality of engaging holes are arranged at a certain interval (pitch), then engaging holes may be connected with each other thereby to allow the inside connecting length to be simply and easily adjusted. More specifically, one of the first adjusting member or the second adjusting member may have a plurality of first engaging holes provided at a certain interval, the other of the first adjusting member or the second adjusting member may have a second engaging hole to be aligned with each of the first engaging holes, and the connecting member may comprise an engaging member engaging with aligned first engaging hole and second engaging hole.

It may be enough if a plurality of engaging holes are formed in either one of the first adjusting member or the second adjusting member, but a plurality of engaging holes may also be formed in each adjusting member. The number of engaging holes to be arranged and the interval (pitch) of the engaging holes are not limited, but the larger the number of engaging holes is, the larger the adjusting width (the number of adjusting steps) of the inside connecting length is. For example, the engaging holes may preferably be arranged such that the inside connecting length can be adjusted among at least three steps, i.e., a normal set position that corresponds to an expected outer diameter, an elongated set position where the inside connecting length is longer than that at the normal set position, and a shortened set position where the inside connecting length is shorter than that at the normal set position. Of course, the number of engaging holes may be such that the number of adjusting steps is four or more.

It is preferred that the engaging member can easily be engaged with and released from the aligned engaging holes in order to easily adjust the inside connecting length. To this end, the engaging member to engage the aligned first engaging hole and second engaging hole with each other may preferably be a pin or a screw for being inserted in these engaging holes, for example. The form of pin and screw is not limited, but a screw or other appropriate component which comprises split pin or lock mechanism (such as double nut) may preferably be used. While the adjusting members connected by the engaging member may be fixed to each other, they may also be pivotally movable with each other to some extent because in this case the usability of the anti-skid device, such as attachment, detachment and storage, may be easy. Note that one set (pair) of engaging holes may be aligned with the other set between the first adjusting member and the second adjusting member, or two or more sets (pairs) may be aligned with the other sets.
(2) According to another embodiment, the inside coupling adjuster may comprise: a first adjusting screw provided to extend from the first inside front connector in the frontward circumferential direction; a second adjusting screw threaded reversely to the first adjusting screw and provided to extend from the second inside rear connector in the rearward circumferential direction; and a turnbuckle screw having a first threaded portion screwed to the first adjusting screw and a second threaded portion screwed to the second adjusting screw.

When such an inside coupling adjuster is used, the turnbuckle screw may be rotated and the distance between the first inside front connector and the second inside rear connector (inside connecting length) can thereby be easily adjusted to elongate or shorten in a substantially non-step manner within a certain range. It is enough if a part of each adjusting screw to be screwed in the turnbuckle screw is threaded, and other part may merely be a rod-like or plate-like shape, etc.

The turnbuckle screw may be formed with a pair of reverse screws to be screwed to the adjusting screws, and may have any shape, such as column-like, cylinder-like and ring-like shape. Note, however, that if the turnbuckle screw is provided at least partly with a flat portion or parallel portion, etc. rather than having the whole outer circumferential surface of simple shape, such as cylindrical shape, then the turnbuckle screw can easily be rotated to facilitate the adjustment of the inside connecting length.

It is preferred that the above-described turnbuckle screw further has a restricting portion capable of contacting with the inside sidewall part of a tire to restrict the rotation when the anti-skid device is attached to the tire. According to the turnbuckle screw having such a restricting portion, even if rotative forces are applied such as due to vibration caused during the use of the anti-skid device, the turnbuckle screw can contact with the inside sidewall part of a tire to prevent itself from freely rotating. Therefore, the inside connecting length adjusted using such an inside coupling adjuster can steadily be maintained during the use of the anti-skid device thereby to ensure that the anti-skid device is stably attached to the tire.

Such a restricting portion may be a flat (and/or ring-like) frame that bridges the above-described first threaded portion and second threaded portion, for example. Well-known, so-called turnbuckle may be mentioned as a specific example of such a turnbuckle screw.
(3) To absorb the variation in outer diameter of tires while enabling the anti-skid device to stably be attached to the tire, it is preferred not only that the inside connecting length can be adjusted, but also that the distance between the first outside rear connector and the second outside front connector can be adjusted between two adjacent elementary units located at the outside of the tire (vehicle outside or opposite side to the tire housing). To this end, the anti-skid device according to the present invention may preferably comprise an outside coupling adjuster capable of adjusting the distance (outside connecting length) between the first outside rear connector and the second outside front connector that are to be connected with each other when the anti-skid device is attached to a tire. Specific structure of the outside coupling adjuster is not limited, but a similar structure to that of the above-described inside coupling adjuster or a structure as described in PTL 1 may be employed, for example.

However, the outside coupling adjuster may be such that, unlike the inside coupling adjuster, the connection and disconnection are repeated every time the anti-skid device is attached to and detached from a tire. Therefore, the outside coupling adjuster may be required to have better properties, such as attachability, detachability and operability, than those of the inside coupling adjuster. In this respect, the outside coupling adjuster may preferably comprise: a first outside adjusting member which is provided to extend from one of the first outside rear connector or the second outside front connector and in which a plurality of first connecting holes are provided at a certain interval; a second outside adjusting member which is provided to extend from the other of the first outside rear connector or the second outside front connector and which has a second connecting hole to be aligned with the first connecting holes; a connecting pin to be inserted in the aligned first connecting hole and second connecting hole; and a biasing body which biases the connecting pin toward a side which allows the connection between the first outside adjusting member and the second outside adjusting member to be held, for example.

In this case, the connection and disconnection between the first outside adjusting member and the second outside adjusting member can be carried out simply by sliding the connecting pin against the biasing body, so that the attachment and detachment of the anti-skid device can speedily and easily be performed. It is of course easy to vary the outside connecting length by changing the aligned position of the first connecting hole and the second connecting hole. The outside coupling adjuster can thus cooperate with the above-described inside coupling adjuster thereby to further expand the absorbable range for the outer diameter variation of tires, and the speedy and easy attachability of the anti-skid device can stably be maintained.

### «Contact member»

It is preferred that the elementary unit according to the present invention further has a contact member covering at least a part of the above-described each connector or adjusting member while being capable of contacting the outside sidewall part of a tire. Providing this contact member allows the anti-skid device to have entirely enhanced degree of contact with the tire and to be held stably on the tire. For example, even if the rotating tire expands and contracts at sidewall parts, the contact member can follow such movement to hold the anti-skid device stably on the tire. In addition, the contact member acts as a buffer to hold more flexibly the anti-skid device to the tire. This allows the contact member to absorb various vibrations and impacts etc. applied when the vehicle runs, so that troubles such as vibration and noise caused from the anti-skid device can be prevented when the vehicle runs, and damages etc. can also be reduced from occurring in the anti-skid device itself and the tire. Moreover, the contact member avoids the connectors and other components from contacting directly with the wheel to prevent damages on the wheel.

It is preferred that the contact member according to the present invention is formed of more flexible material than those of connectors and other components because the contact member can act as a buffer (cushion material) such as for the connectors and other components which may be formed of hard metal. For example, the contact member may preferably be formed of an elastic body, such as rubber and resin.

The shape of the contact member may preferably be tubular shape in which the connector can be inserted. In this case, the contact member needs not cover the whole of the connector. It may be enough if the contact member is at least present at the side of the sidewall part of the tire. The shape of the contact member may be any of simple circular tube-like, conical tube-like, square tube-like, pyramid tube-like or other appropriate shapes. Dimensions thereof, such as the thickness and the length, may appropriately be adjusted. It is preferred that the contact member is held to be rotatable on the connector because in this case the contact member can be prevented from unsymmetrical wear etc.

### «Abutting member»

It is preferred that the anti-skid device according to the present invention comprises an abutting member along with the above-described contact member. Therefore, the anti-skid device according to the present invention may preferably be such that the inside front extending portion of the first main body is provided with a first inside abutting member abutting the inside sidewall part, the outside rear extending portion of the first main body is provided with a first outside abutting member abutting the outside sidewall part, the inside rear extending portion of the second main body is provided with a second inside abutting member abutting the inside sidewall part, and the outside front extending portion of the second main body is provided with a second outside abutting member abutting the outside sidewall part.

### «Elementary unit»

The anti-skid device according to the present invention comprises elementary units as basic units, each of which comprises a first main body, a first inside front connector and a first outside rear connector (which may be collectively referred to as "first group members"), and a second main body, a second inside rear connector and a second outside front connector (which may be collectively referred to as "second group members"). Two or more elementary units are combined to constitute the anti-skid device.

In general, the inside connectors (the first inside front connector and the second inside rear connector) remain to be connected with each other using the inside coupling adjuster except for when the inside connecting length is adjusted. In other words, the attachment and detachment of the anti-skid device are carried out using the outside connectors (the first outside rear connector and the second outside front connector, and further the outside coupling adjuster) being connected with and disconnected from each other.

An anti-skid device for small-sized vehicles, such as light motor vehicles, may have a set of two elementary units, for example, and the outside connectors can be connected with and disconnected from each other at one location to thereby allow the anti-skid device to be attached and detached. This applies to a case of three or more elementary units. Of course, an anti-skid device for large-sized vehicles, such as industrial motor vehicles, may have three elementary units capable of being divided, for example, and the outside connectors may be connected with and disconnected from one another at three locations. In addition, an anti-skid device for typical vehicles may have two elementary units capable of being divided, for example, and the outside connectors may be connected with and disconnected from each other at two locations.

### [Examples]

### «Overview»

Fig. 1 illustrates an appearance that an anti-skid device S for tires (referred simply to as "anti-skid device S") as one example of the present invention is attached to a tire T for large-sized motor vehicles. The anti-skid device S comprises three elementary units 1, 2 and 3. The elementary units 1, 2 and 3, which have the same form, are connected with one another in connectable and disconnectable manner at the outside of the tire T (paper front side of Fig. 1) as the side of the decorative surface of a wheel (not shown). Among them, one elementary unit 1 will hereinafter be described also with reference to Fig. 2, Fig. 3 and Fig. 5, which are enlarged views thereof.

### «Elementary unit»

The elementary unit 1 comprises a first main body 11, a second main body 12, inside connectors 13 (131, 132 and 133), outside connectors 14 (141, 142 (242), 143, 144 (244) and 145 (245)), inside abutting members 15 (151 and 152), outside abutting members 16 (161 and 162 (262)), inside contact members 17 (171 and 172), and outside contact members 18 (181 and 182 (282)).

The first main body 11 comprises an inside front extending portion 111, a first U-shaped portion 112, and an outside rear extending portion 113. The first U-shaped portion 112 specifically comprises an inside extending part 112a, a crossing part 112b, and an outside extending part 112c.

The inside extending part 112a extends along the inside sidewall part of the tire T in the radial-increase direction thereof. The crossing part 112b merges into the inside extending part 112a so as to be gently curved outward with about 90 degrees from the inside extending part 112a, and crosses the tread part of the tire T. The crossing part 112b is inserted in a rotary spring 112r, which may be a coil spring and can rotate around the crossing part 112b. The outside extending part 112c is gently curved with about 90 degrees from the crossing part 112b to extend along the outside sidewall part in the radial-decrease direction thereof.

The inside front extending portion 111 merges into the end portion of the inside extending part 112a of the first U-shaped portion 112 so as to be gently curved to the frontward circumferential direction with about 90 degrees, and extends along the inside sidewall part. The outside rear extending portion 113 merges into the end portion of the outside extending part 112c of the first U-shaped portion 112 so as to be gently curved to the rearward circumferential direction with about 90 degrees, and extends along the outside sidewall part.

The second main body 12 comprises an inside rear extending portion 121, a second U-shaped portion 122, and an outside front extending portion 123. The second U-shaped portion 122 specifically comprises an inside extending part 122a, a crossing part 122b, and an outside extending part 122c.

The inside extending part 122a extends along the inside sidewall part of the tire T in the radial-increase direction thereof. The crossing part 122b merges into the inside extending part 122a so as to be gently curved outward with about 90 degrees from the inside extending part 122a, and crosses the tread part of the tire T. The crossing part 122b is also inserted in a rotary spring 122r, which may be a coil spring and can rotate around the crossing part 122b. The outside extending part 122c is gently curved with about 90 degrees from the crossing part 122b to extend along the outside sidewall part in the radial-decrease direction thereof.

The inside rear extending portion 121 merges into the end portion of the inside extending part 122a of the second U-shaped portion 122 so as to be gently curved to the rearward circumferential direction with about 90 degrees, and extends along the inside sidewall part. The outside front extending portion 123 merges into the end portion of the outside extending part 122c of the second U-shaped portion 122 so as to be gently curved to the frontward circumferential direction with about 90 degrees, and extends along the outside sidewall part.

A (first) inside front connector 131 is provided pivotally at the end portion of the inside front extending portion 111 of the first main body 11. A (second) inside rear connector 132 is provided pivotally at the end portion of the inside rear extending portion 121 of the second main body 12. The inside front connector 131 and the inside rear connector 132 are connected with each other by way of an inside coupling adjuster 133 capable of adjusting the distance therebetween (inside connecting length). The inside coupling adjuster 133 is thus configured such that its pivotal motion can be possible to some extent along the inside sidewall part by means of at least the inside front connector 131 and the inside rear connector 132. Details of the inside coupling adjuster 133 will be described later.

A (first) outside rear connector 141 is provided pivotally at the end portion of the outside rear extending portion 113 of the first main body 11. A (second) outside front connector 142 is provided pivotally at the end portion of the outside front extending portion 123 of the second main body 12. Further, a male connector 143 (first outside adjusting member) is provided pivotally at the rear-end portion of the outside rear connector 141, and a female connector 144 (second outside adjusting member) is provided pivotally at the front-end portion of the outside front connector 142.

The male connector 143 can be easily connected to and disconnected from a female connector 244 (second outside adjusting member), which is provided pivotally at a (second) outside front connector 242 of the elementary unit 2, with an adjusted distance (outside connecting length) therebetween. In a similar manner, the female connector 144 can be easily connected to and disconnected from a male connector 343 (first outside adjusting member) of the elementary unit 3 with an adjusted distance (outside connecting length) therebetween. Details of these connecting mechanisms (outside coupling adjusters) will also be described later.

The inside front extending portion 111 of the first main body 11 is inserted in a first inside abutting member 151 formed of hard rubber in a tubular shape so that the first inside abutting member 151 can rotate on the inside front extending portion 111. The inside rear extending portion 121 of the second main body 12 is inserted in a second inside abutting member 152 formed of hard rubber in a tubular shape so that the second inside abutting member 152 can rotate on the inside rear extending portion 121. The outside rear extending portion 113 of the first main body 11 is inserted in a first outside abutting member 161 formed of hard rubber in a tubular shape so that the first outside abutting member 161 can rotate on the outside rear extending portion 113. The outside front extending portion 123 of the second main body 12 is inserted in a second outside abutting member 162 (262) formed of hard rubber in a tubular shape so that the second outside abutting member 162 (262) can rotate on the outside front extending portion 123. Inside abutting members 15 (151 and 152) and outside abutting members 16 (161 and 162) will be referred collectively to as "abutting members 15 and 16". Note that these abutting members have the same properties and the same form.

In addition, the inside front connector 131 is inserted in a first inside contact member 171 formed of hard rubber in a tubular shape so that the first inside contact member 171 can rotate on the inside front connector 131. The inside rear connector 132 is inserted in a second inside contact member 172 formed of hard rubber in a tubular shape so that the second inside contact member 172 can rotate on the inside rear connector 132. The outside rear connector 141 is inserted in a first outside contact member 181 formed of hard rubber in a tubular shape so that the first outside contact member 181 can rotate on the outside rear connector 141. The outside front connector 142 is inserted in a second outside contact member 182 formed of hard rubber in a tubular shape so that the second outside contact member 182 can rotate on the outside front connector 142. Inside contact members 17 (171 and 172) and outside contact members 18 (181 and 182) will be referred collectively to as "contact members 17 and 18".

These contact members also have the same properties and the same form. Note, however, that the contact members 17 and 18 have a slightly thinner thickness than those of the previously-described abutting members 15 and 16. This causes the abutting members 15 and 16 to mainly contact the inside and outside sidewall parts of the tire T while the contact members 17 and 18 may subsidiarily contact the inside and outside sidewall parts.

### «Outside connector and outside coupling adjuster»

Descriptions will now be directed to an appearance that the elementary units are coupled together at the outside sidewall part of the tire T. Fig. 3 enlarges and shows an appearance as one example that the elementary unit 1 and the elementary unit 2 are connected with each other by way of the male connector 143 provided pivotally at the outside rear connector 141, the female connector 244 provided pivotally at the outside front connector 242, and a connector 245. Note that the male connector 143, the female connector 244 and the connector 245 represent one example of the outside coupling adjuster as referred to herein.

First, the outside rear connector 141 comprises two connecting plates 141 a and 141b, and pins 141c and 141d (pivotal axes) that have both swaged ends and connect both end portions of the connecting plates 141 a and 141b. At the frontward side of the connecting plates 141 a and 141b, the pin 141c pivotally supports the end portion of the outside rear extending portion 113, while at the rearward side of the connecting plates 141 a and 141b, the pin 141 d pivotally supports the end portion of the male connector 143.

In a similar manner, the outside front connector 242 also comprises two connecting plates 242a and 242b, and pins 242c and 242d (pivotal axes) that have both swaged ends and connect both end portions of the connecting plates 242a and 242b. At the rearward side of the connecting plates 242a and 242b, the pin 242c pivotally supports the end portion of an outside front extending portion 223, while at the frontward side of the connecting plates 242a and 242b, the pin 242d pivotally supports the end portion of the female connector 244.

Next, the male connector 143 comprises a round rod body 143a having a plurality of (first) connecting holes 143b which pass through the round rod body 143a in the radial direction of the tire T (in the case of Fig. 3, four connecting holes 143b are arranged in the longitudinal direction). The female connector 244 comprises a circular cylinder body 244a having (second) connecting holes 244b which pass through the circular cylinder body 244a in the radial direction of the tire T, and pin-inserting holes 244c.

The connector 245 comprises: a connecting pin 245a configured such that two pins having different lengths form a U-shape so as to be inserted in the connecting holes 244b and the pin-inserting holes 244c; a coil spring (biasing body) 245b which biases the connecting pin 245a in the radial-increase direction (centrifugal direction) of the tire T; and a hard rubber button 245c provided at one end portion of the connecting pin 245a. The coil spring 245b is interposed between the outer circumferential surface of the circular cylinder body 244a and an end surface of the button 245c. This causes the connector 245 to be elastically held on and in the female connector 244.

The connection between the male connector 143 and the female connector 244 is performed as below after the anti-skid device S is overlaid on the outer circumference side of the tire T. First, the button 245c of the connector 245 is pressed down to the circular cylinder body 244a of the female connector 244 toward the center of the tire T. The round rod body 143a of the male connector 143 is inserted into the circular cylinder body 244a in this state, so that the connecting holes 244b are aligned to an appropriately selected connecting hole 143b.

Thereafter the button 245c is released thereby to insert the shorter side of the connecting pin 245a into both the aligned connecting hole 143b and the connecting holes 244b and maintain the state of being elastically held by the coil spring 245b. In such a manner the male connector 143 and the female connector 244 are steadily connected to ensure an appropriate outside connecting length between the elementary unit 1 and the elementary unit 2, and the attachment of the anti-skid device S is thus completed. When the anti-skid device S is detached, the male connector 143 can be pulled out from the female connector 244 in the state where the button 245c is pressed down to the circular cylinder body 244a toward the center of the tire T.

Fig. 3 illustrates a case where only the connecting plate 141 a of the outside rear connector 141 or the connecting plate 242a of the outside front connector 242 is inserted in the first outside contact member 181 or the second outside contact member 282 so that the first outside contact member 181 or the second outside contact member 282 can rotate on the connecting plate 141a or the connecting plate 242a. In an alternative case as shown in Fig. 4, for example, a first outside contact member 181' or a second outside contact member 282' may be employed which surrounds whole of the outer circumference of the connecting plates 141a and 141b or the connecting plates 242a and 242b.

In any of these cases, the first outside contact member 181, 181' or the second outside contact member 282, 282' may timely contact the outside sidewall part of the tire T with a moderate force to prevent the outside rear connector 141 or the outside front connector 242 from directly contacting the outside sidewall part and the decorative surface of the wheel. This applies to other connectors and contact members.

### «Inside connector and inside coupling adjuster»

(1) Descriptions will then be directed to an appearance that the elementary units are coupled together at the inside sidewall part of the tire T. Fig. 5 shows an appearance as one example that the first main body 11 and the second main body 12 of the elementary unit 1 are connected with each other by way of a first adjusting member 1331 provided pivotally at the inside front connector 131, a second adjusting member 1332 provided pivotally at the inside rear connector 132, and connecting members 1333 and 1334. Note that the first adjusting member 1331, the second adjusting member 1332, and the connecting members 1333 and 1334 (engaging members) constitute the inside coupling adjuster 133.

First, the inside front connector 131 comprises two connecting plates 131 a and 131b, and pins 131c and 131d (pivotal axes) that have both swaged ends and connect both end portions of the connecting plates 131 a and 131b. At the rearward side of the connecting plates 131a and 131 b, the pin 131c pivotally supports the end portion of the inside front extending portion 111, while at the frontward side of the connecting plates 131a and 131b, the pin 131d pivotally supports the end portion of the first adjusting member 1331.

In a similar manner, the inside rear connector 132 also comprises two connecting plates 132a and 132b, and pins 132c and 132d (pivotal axes) that have both swaged ends and connect both end portions of the connecting plates 132a and 132b. At the frontward side of the connecting plates 132a and 132b, the pin 132c pivotally supports the end portion of the inside rear extending portion 121, while at the rearward side of the connecting plates 132a and 132b, the pin 132d pivotally supports the end portion of the second adjusting member 1332.

Next, the first adjusting member 1331 comprises a plate-like body 1331a having a plurality of (first) engaging holes 1331b which pass through the plate-like body 1331a in a direction substantially perpendicular to the inside sidewall part of the tire T (in the case of Fig. 5, five engaging holes 1331b are arranged in the longitudinal direction). The second adjusting member 1332 comprises a plate-like body 1332a having a plurality of (second) engaging holes 1332b which pass through the plate-like body 1332a in a direction substantially perpendicular to the inside sidewall part of the tire T (in the case of Fig. 5, five engaging holes 1332b are arranged in the longitudinal direction).

Connecting members 1333 and 1334, which comprise repeatedly usable split pins, are inserted in respective pairs of the engaging holes 1331b and 1332b that are aligned at two positions. According to the present example, in order to avoid damages of the tire T, the head of each split pin is located at the inside sidewall part side of the tire T, while the branching ends of each split pin are located at the opposite side thereto.

According to this inside coupling adjuster 133, alignment positions of the engaging holes 1331b and the engaging holes 1332b in which the connecting members 1333 and 1334 are to be inserted may only be changed thereby to allow the distance between the inside front connector 131 of the first main body 11 and the inside rear connector 132 of the second main body 12 (inside connecting length) to easily be adjusted in a multistep manner (four steps in the case of Fig. 5). Note that the arrangement of the connecting members 1333 and 1334 is not limited to the case shown in Fig. 5. Note also that although two split pins are used for engagement of the first adjusting member 1331 and the second adjusting member 1332 according to the present example, the number of the split pins may appropriately be adjusted.
(2) Fig. 6 illustrates an example in which the above-described inside coupling adjuster 133 is substituted by an inside coupling adjuster 136. The inside coupling adjuster 136 comprises a first adjusting member 1361 provided pivotally at the inside front connector 131, second adjusting members 1362 and 1363 provided pivotally at the inside rear connector 132, and connecting members 1365 and 1366 (engaging members) connecting them. Note that descriptions for similar structures to those in the case shown in Fig. 5 are omitted.

Like the first adjusting member 1331, the first adjusting member 1361 comprises a plate-like body 1361a having a plurality of (first) engaging holes 1361b which pass through the plate-like body 1361a in a direction substantially perpendicular to the inside sidewall part of the tire T (in the case of Fig. 6, five engaging holes 1361b are arranged in the longitudinal direction).

The second adjusting members 1362 and 1363 comprise two plate-like bodies 1362a and 1363a each having a plurality of (second) engaging holes 1362b, 1363b which pass through the plate-like body 1362a, 1363a in a direction substantially perpendicular to the inside sidewall part of the tire T (in the case of Fig. 6, five engaging holes 1362b and five engaging holes 1363b are arranged in the longitudinal direction). Note that the plate-like bodies 1362a and 1363a are provided pivotally at the pin 132d so that a washer 1364 having the same thickness as that of the plate-like body 1361a is interposed between the plate-like bodies 1362a and 1363a.

The connecting members 1365 and 1366 respectively comprise: bolts 1365a and 1366a inserted in the aligned engaging holes 1361b, 1362b and 1363b; nuts 1365b and 1366b screwed to the bolts 1365a and 1366a; and locknuts 1365c and 1366c screwed to the bolts 1365a and 1366a to prevent the nuts 1365b and 1366b from loosening.

According to this inside coupling adjuster 136, alignment positions of the engaging holes 1361b, 1362b and 1363b may only be changed, so that each bolt is fastened with each nut and each locknut, thereby to allow the distance between the inside front connector 131 of the first main body 11 and the inside rear connector 132 of the second main body 12 (inside connecting length) to easily be adjusted in a multistep manner (four steps in the case of Fig. 6). Also in this case, the arrangement and the number of bolts and other components may appropriately be selected, and the adjustment of the inside connecting length can be repeatedly performed like using the split pins.
(3) Fig. 7 illustrates an example in which the above-described inside coupling adjuster 133 or 136 is substituted by an inside coupling adjuster 137. The inside coupling adjuster 137 is provided as a turnbuckle comprising a first adjusting member 1371 provided pivotally at the inside front connector 131, a second adjusting member 1372 provided pivotally at the inside rear connector 132, and a connecting member 1375 connecting them. Note that descriptions for similar structures to those in the case shown in Fig. 5 or Fig. 6 are omitted.

The first adjusting member 1371 (first adjusting screw) comprises a flat ring portion 1371a supported pivotally at the pin 131d, a round rod-like rod portion 1371b extending from the flat ring portion 1371a to the frontward side, and a threaded portion 1371c formed at the end portion of the rod portion 1371 b.

The second adjusting member 1372 (second adjusting screw) comprises a flat ring portion 1372a supported pivotally at the pin 132d, a round rod-like rod portion 1372b extending from the flat ring portion 1372a to the rearward side, and a threaded portion 1372c formed at the end portion of the rod portion 1372b. Note that the threaded portion 1371c and the threaded portion 1372c are reversely threaded to each other.

The connecting member 1375 (turnbuckle screw) comprises a threaded portion 1375a (first threaded portion) screwed to the threaded portion 1371c of the first adjusting member 1371, a threaded portion 1375b (second threaded portion) screwed to the threaded portion 1372c of the second adjusting member 1372, and a flat ring-like frame 1375c that bridges the threaded portion 1375a and the threaded portion 1375b. Note that the threaded portion 1375a and the threaded portion 1375b are also reversely threaded to each other.

The frame 1375c is rotated in a state where the threaded portion 1371c is screwed in the threaded portion 1375a and the threaded portion 1372c is screwed in the threaded portion 1375b, and the distance between the inside front connector 131 of the first main body 11 and the inside rear connector 132 of the second main body 12 (inside connecting length) can thereby be easily adjusted to elongate or shorten in a non-step manner.

Note that the frame 1375c is located near the inside sidewall part of the tire T in the present example. This allows the frame 1375c to rotate only a small angle because the frame 1375c, which has a flat ring-like shape, is likely to contact with the inside sidewall part when the anti-skid device is attached. Consequently, the frame 1375c acts as a restricting portion that provides anti-rotation function in itself. Of course, as shown in Fig. 7, locknuts 1377 and 1378 screwed to the threaded portions 1371c and 1372c may be provided at both outer end sides of the frame 1375c thereby to hold the frame 1375c at a fixed position and ensure the inside connecting length to be constant.

### [Reference Signs List]

- S: Anti-skid device for tires
- 1: Elementary unit
- 11: First main body
- 12: Second main body
- 131: (First) inside front connector
- 132: (Second) inside rear connector
- 133: Inside coupling adjuster
- 141: (First) outside rear connector
- 142: (Second) outside front connector

## Claims

1. An anti-skid device for tires, the anti-skid device comprising two or more elementary units, each of the two or more elementary units comprising:
a first main body comprising a first U-shaped portion located from an inside sidewall part of a tire fitted therein with a wheel for vehicles to an outside sidewall part of the tire across a tread part of the tire, an inside front extending portion merging into the first U-shaped portion at the inside sidewall part side and extending in a frontward circumferential direction of the tire, and an outside rear extending portion merging into the first U-shaped portion at the outside sidewall part side and extending in a rearward circumferential direction of the tire;
a first inside front connector provided pivotally at the inside front extending portion of the first main body;
a first outside rear connector provided pivotally at the outside rear extending portion of the first main body;
a second main body located at the frontward circumferential direction side of the first main body, the second main body comprising a second U-shaped portion located from the inside sidewall part to the outside sidewall part across the tread part, an inside rear extending portion merging into the second U-shaped portion at the inside sidewall part side and extending in the rearward circumferential direction of the tire, and an outside front extending portion merging into the second U-shaped portion at the outside sidewall part side and extending in the frontward circumferential direction of the tire;
a second inside rear connector provided pivotally at the inside rear extending portion of the second main body; and
a second outside front connector provided pivotally at the outside front extending portion of the second main body,
the first inside front connector and the second inside rear connector being connected with each other to form each of the two or more elementary units,
each of the two or more elementary units further comprising:
an inside coupling adjuster capable of adjusting a distance between the first inside front connector and the second inside rear connector.

2. The anti-skid device for tires as recited in claim 1, wherein the inside coupling adjuster comprises:
a first adjusting member provided to extend from the first inside front connector in the frontward circumferential direction;
a second adjusting member provided to extend from the second inside rear connector in the rearward circumferential direction; and
a connecting member connecting the first adjusting member and the second adjusting member.

3. The anti-skid device for tires as recited in claim 2, wherein
one of the first adjusting member or the second adjusting member has a plurality of first engaging holes provided at a certain interval,
the other of the first adjusting member or the second adjusting member has a second engaging hole to be aligned with each of the first engaging holes, and
the connecting member comprises an engaging member engaging with aligned first engaging hole and second engaging hole.

4. The anti-skid device for tires as recited in claim 3, wherein the engaging member comprises a pin or screw inserted in the aligned first engaging hole and second engaging hole.

5. The anti-skid device for tires as recited in claim 2, wherein the inside coupling adjuster comprises:
a first adjusting screw provided to extend from the first inside front connector in the frontward circumferential direction;
a second adjusting screw threaded reversely to the first adjusting screw and provided to extend from the second inside rear connector in the rearward circumferential direction; and
a turnbuckle screw having a first threaded portion screwed to the first adjusting screw and a second threaded portion screwed to the second adjusting screw.

6. The anti-skid device for tires as recited in claim 5, wherein the turnbuckle screw has a restricting portion capable of contacting with the inside sidewall part to restrict rotation when the anti-skid device is attached to a tire.

7. The anti-skid device for tires as recited in claim 6, wherein the restricting portion comprises a flat frame that bridges the first threaded portion and the second threaded portion.

8. The anti-skid device for tires as recited in either one of claims 1 to 7, wherein each of the two or more elementary units further comprises an outside coupling adjuster capable of adjusting a distance between the first outside rear connector and the second outside front connector that are to be connected with each other when the anti-skid device is attached to a tire.
